# EUROPEAN PATENT APPLICATION

(11) **EP 3 453 652 A1**
(43) Date of publication of application: **13.03.2019**
(21) Application number: 18192676.7
(22) Date of filing: 05.09.2018
(51) Int. Cl.: B65G 47/82, C03B 9/453

(54) **TRACKING SYSTEM, ARTICLE HANDLING APPARTUS AND METHOD**

(30) Priority: 07.09.2017 GB 201714431
(71) Applicant: Sheppee International Limited, York, Yorkshire YO41 4AU (GB)
(72) Inventor: RICE, Colin, York, Yorkshire YO41 4AU (GB); ASKEW, Mark, York, Yorkshire YO41 4AU (GB)
(74) Representative: Murgitroyd & Company

(57) **Abstract**

A tracking and control system for use with an article handling apparatus of the type comprising a first conveyor for the passage of articles in a first direction at a first conveyance velocity a second conveyor for the passage of articles in a second direction at an angle to the first direction at a second conveyance velocity, and a distributor for the routeing of articles from the first conveyor to the second conveyor, including an article handler disposed to push the articles from the first conveyor onto the second conveyor is described. The tracking and control system has an actuator operable upon the article handler to cause the same to push articles at a variable push velocity off the first conveyor and onto the second conveyor; a monitor to monitor a conveyance velocity of the second conveyor; a feedback controller to control the actuator such that a final push velocity as the article is pushed onto the second conveyor is more closely matched to the second conveyance velocity. An article handling apparatus and an article handling method are also described.

## Description

The invention relates to a tracking and control system for use with an article handling apparatus which transfers articles from a series on one conveyor to groups in rows or ranks on another conveyor, and for example relates to a tracking and control system for use with a lehr loader or stacker which transfers articles from a main conveyor to a lehr conveyor of an annealing lehr oven. The invention also relates to an article handling apparatus such as a lehr loader or stacker and to an article handling and processing system such as a lehr system incorporating such a tracking system. The invention further relates to a handling method for handling the transfer of articles for example from a series on one conveyor to groups in rows or ranks on another conveyor such as a lehr conveyor.

The system, apparatus and method are typically used in conjunction with a containerware fabrication machine for forming an array of articles, in particular of glass, glass-like material or other material requiring similar heat treatment, that pass through an annealing lehr after initial fabrication. In particular, the invention relates to a tracking system, apparatus and method for routeing recently formed containerware from a first conveyor belt where a row of such containers is conveyed in a first direction, and for example at a relatively high speed, to a second conveyor belt, being for example a lehr conveyor belt, where a row of containers is conveyed in a second direction at an angle thereto, such as a right angle thereto, and for example at a lower speed.

Lehr loaders or stackers are well known in the art for use in conjunction with a containerware fabrication machine to pass the formed containers through to an annealing lehr.

It is common in such systems for formed containerware to have a requirement to transfer the formed containers from a first conveyor that takes as-fabricated containerware from a fabrication machine to a second conveyor at an angle thereto and for example at right angles thereto to convey the formed containers to an annealing lehr.

Various designs of distributor apparatus such as stackers for giving convenient effect to this are well known. Generally speaking, a distributor means such as a pusher bar is disposed at a transfer region where containerware from a fabrication machine is to be transferred from such a first to such a second conveyor which has transportation members to support, typically individually, the containers to be transferred and to move the same off the first and onto the second conveyor.

Typically, the first or main conveyor operates at a relatively higher conveyance velocity, and the second or cross or lehr conveyor operates at a relatively lower conveyance velocity. While basic stackers may employ simple linkage mechanisms to operate the pusher bars and move the containers between the conveyors, in general more accurate control over the displacement paths of the ware is desired. In particular the displacement paths must have velocity and displacement directions which produce changes in speed or direction that can be tolerated by the often fragile, newly formed containers prior to annealing in the lehr. This can mean accommodating the potentially conflicting requirements of moving formed containers as quickly as possible off the higher speed first or main conveyor, while delivering the formed containers in a controlled manner that avoids damaging stresses to the lower speed second, cross or lehr conveyor.

It is accordingly a general object of the present invention to provide a tracking and control system for use with an article handling apparatus such as a lehr loader or stacker, and an article handling apparatus and method, that permit better control of the various displacement and timing parameters involved as formed containerware is moved from a first, main conveyor to a second, cross or lehr conveyor.

In accordance with the invention in first aspect, a tracking and control system is provided for use with an article handling apparatus such as a lehr loader or stacker an article handling apparatus of the type comprising:
a first conveyor for the passage of articles in a first direction at a first conveyance velocity;
a second conveyor for the passage of articles in a second direction at an angle to the first direction at a second conveyance velocity;
a distributor for the routeing of articles from the first conveyor to the second conveyor, including an article handler disposed to push the articles from the first conveyor onto the second conveyor.

The tracking and control system of the first aspect of the invention comprises:
an actuator operable upon the article handler to cause the same to push articles at a variable push velocity off the first conveyor and onto the second conveyor;
a monitor to monitor a conveyance velocity of the second conveyor;
a feedback controller to control the actuator such that a final push velocity as the article is pushed onto the second conveyor is more closely matched to the second conveyance velocity.

The key to the invention is that a feedback control of the actuator is effected, using the conveyance velocity of the second conveyor as a control parameter, to achieve better matching of the final push velocity (that is, the push velocity as the article is pushed onto the second conveyor) to the speed of the second conveyor. The actuator is thereby configured such that it is operable upon the article handler to cause the same to push the containers at a variable push velocity off the first conveyor and onto the second conveyor such that a final push velocity as the article is pushed onto the second conveyor is more closely matched to the second conveyance velocity than is an initial push velocity as the article is pushed off the first conveyor.

For example, the actuator is operable upon the article handler to cause the same to push articles at least at a first push velocity off the first conveyor and at a second push velocity onto the second conveyor; and the feedback controller is adapted to control the actuator such that the second push velocity is more closely matched to the second conveyance velocity than is the first push velocity.

By analogy in accordance with the invention in a more complete second aspect, an article handling apparatus comprises:
a first conveyor for the passage of articles in a first direction at a first conveyance velocity;
a second conveyor for the passage of articles in a second direction at an angle to the first direction at a second conveyance velocity;
a distributor for the routeing of articles from the first conveyor to the second conveyor, including:
an article handler disposed to push the articles from the first conveyor onto the second conveyor;
an actuator operable upon the article handler to cause the same to push articles at a variable push velocity off the first conveyor and onto the second conveyor;
a monitor to monitor a conveyance velocity of the second conveyor;
a feedback controller to control the actuator such that a final push velocity as the article is pushed onto the second conveyor is more closely matched to the second conveyance velocity.

For example the actuator is adapted to cause the article handler to push the containers at least at a first push velocity off the first conveyor and at a second push velocity onto the second conveyor;
and the feedback controller is adapted to control the actuator such that the second push velocity is more closely matched to the second conveyance velocity than is the first push velocity.

By further analogy in accordance with the invention in a third aspect, an article handling method comprises:
moving a succession of articles from a first conveyor for the passage of articles in a first direction at a first conveyance velocity to a second conveyor for the passage of articles in a second direction at an angle to the first direction at a second conveyance velocity by:
pushing each article from the first conveyor to the second conveyor at a variable push velocity;
monitoring the second conveyance velocity;
controlling the variable push velocity such that an article is pushed onto the second conveyer at a final push velocity that it is more closely matched to the second conveyance velocity.

For example the method comprises pushing each article from the first conveyor to the second conveyor at a first push velocity off the first conveyor and at a second push velocity onto the second conveyor;
monitoring the second conveyance velocity;
controlling the second push velocity so that it is more closely matched to the second conveyance velocity than is the first push velocity.

In accordance with the principles of the invention, an article is pushed off a first conveyor and onto a second conveyor operating at different speeds and in different directions. The push velocity may be varied. In particular, the final push velocity as the article is pushed finally onto the second conveyor to complete the transfer process is different from an earlier push velocity applied earlier in the transfer process, and may be variably adjusted to correspond to that of the second conveyor. The key principle of the invention is that speed of the second conveyor is used as a control parameter whereby a final push velocity as an article is pushed onto the second conveyer is more closely matched to the second conveyance velocity than a previous push velocity such as an initial push velocity.

In a simple case this requires that the actuator is adapted to cause the article handler to push, and the method comprises pushing, at a minimum of two push velocities, a first or initial push velocity as the article is pushed off the first conveyor, and a second or final push velocity as the article is pushed onto the second conveyor.

The description herein by way of example of embodiments, which may be preferred in many cases, adapted for two such push velocities, and the use in consequence of interchangeable references to initial/ first and final/ second push velocities, should not be read as precluding from the scope of the invention embodiments adapted for multiple push velocities, continuously variable velocities etc, so long as consistent with the principle that a final push velocity as an article is finally pushed onto the second conveyer is more closely matched to the conveyance velocity of the second conveyer by means of monitoring of and feeding back the conveyance velocity of the second conveyer.

A succession of articles may thereby be transferred from the first to the second conveyor. Articles may thereby be transferred successively individual or in batches as appropriate.

The system, apparatus and method are advantageously for example used in conjunction with a containerware fabrication machine for forming an array of articles of glass, glass-like material or other material requiring similar heat treatment, that pass through an annealing lehr. In particular, the invention relates to the moving of recently formed containerware from a first, main conveyor where a row of such containers is conveyed away from a fabrication machine in a first direction at a relatively high speed, to a second, cross or lehr conveyor, where a row of containers is conveyed in a second direction at an angle thereto, such as a right angle thereto, and for example at a lower speed to an annealing lehr.

Thus, typically, the second conveyance velocity is less than the first conveyance velocity and usually substantially less.

It is generally desirable for the formed articles to be moved quickly off the first conveyor but to be passed to the second conveyor at a lower speed more closely matched to that of the second conveyor itself. Thus the first push velocity is typically higher than the second push velocity and usually substantially higher.

In accordance with the invention the second push velocity is more closely matched to the second conveyance velocity than is the first push velocity, and typically is substantially lower than the first push velocity. In the preferred case the second push velocity is substantially matched to the second conveyance velocity to minimise stress as the articles are passed onto the second conveyor. This is achieved in accordance with the invention by the monitoring of the second conveyance velocity, and the feedback of this monitored second conveyance velocity as a feedback control to the actuator of the article handler, whereby the second push velocity thereof can be varied and such matching effected.

Advantageously in particular, the second conveyance velocity may be monitored continuously during operation, allowing for continuous variation as necessary of the second push velocity, and more close matching of the second push velocity to the measured second conveyance velocity in real time.

The first push velocity is typically higher than, and typically substantially higher than, the second push velocity. The first push velocity need not in accordance with the principles of the invention be varied over time and may simply be preset.

The first conveyance velocity is typically higher than, and typically substantially higher than, the second conveyance velocity. The first conveyance velocity need not in accordance with the principles of the invention be monitored and may simply be assumed in accordance with the rated speed of the first conveyor.

The key to the invention lies rather in the variation of the second push velocity, especially in real time during operation, by monitoring the second conveyance velocity and feeding back the same as a control parameter, again especially in real time during operation, so as to match the second push velocity more closely to the second conveyance velocity, thus allowing for a higher velocity initial push, while still enabling the final push velocity to be more closely matched to the speed of the second, eg cross or lehr conveyor.

The system and apparatus comprises an actuator adapted to cause the article handler to push the containers at a first push velocity and at a second push velocity onto the second conveyor, and the method comprises pushing each article successively from the first conveyor to the second conveyor at a first push velocity off the first conveyor and at a second push velocity onto the second conveyor.

A transition from the first push velocity to the second push velocity may be effected abruptly and discontinuously or gradually and continuously. Preferably a transition from the first push velocity to the second push velocity is effected abruptly. The actuator is preferably adapted to transition and the method preferably comprises transitioning from the first push velocity to the second push velocity in abrupt manner.

The invention comprises the handling of successive articles from a first moving conveyor to a second moving conveyor. The first and second moving conveyors may directly abut. Alternatively, and preferably, a transition region may be provided between the first and second moving conveyors, in particular a stationary transition region.

For example a stationary or dead plate presenting a sliding surface may be provided in the transition region. For example a stationary or dead plate presenting a sliding surface may be provided alongside a side edge of the first conveyor so as also to abut a leading edge of the second conveyor. Such a dead plate may be provided with an upper sliding surface on which the articles make a substantially sliding contact and across which they are slid as they transfer from the first direction to the second direction, the upper sliding surface of the dead plate being approximately co-planar with upper runs of the first and second moving conveyors.

Where such a stationary transition region/ dead plate is provided, the actuator is preferably adapted to transition and the method preferably comprises transitioning from the first push velocity to the second push velocity in the transition region/ dead plate. In operation therefore, an article is pushed from the first conveyor to the transition region at the first push velocity and from the transition region/ dead plate onto the second conveyor at the second push velocity.

In a preferred case, the article handler is adapted to push the containers from the first conveyor directed in a first direction to the second conveyor directed in a second direction at an angle to the first conveyor via a continuously curved path, and the method comprises pushing the containers from the first conveyor directed in a first direction to a second conveyor directed in a second direction at an angle to the first conveyor via a continuously curved path.

Each of the first and second conveyors is typically an endless conveyor, for example forming an endlessly driven conveyor belt or chain. Each conveyor is driveable longitudinally so as to impart a drive direction to the containers, and to transport the same in a row. The article handler and associated control system comprises a routeing apparatus to route containers arriving from the first conveyor in a conveyed row to the second conveyor where they are carried onwards in a conveyed row.

The conveyance speeds of the primary and secondary conveyors may be adjustable. Possibly, a suitable control algorithm, for example on a suitably programmed computer effects this adjustment.

In a typical embodiment of the invention, the first conveyor is adapted to convey containers in a row for example at a comparatively high first speed, and with a second conveyor for example running at a comparatively lower second speed at an angle thereto, and in particular substantially at a right angle thereto. Such systems are widely used, for example in the fabrication of glass containers, with the first conveyor serving to remove as-fabricated containers from a fabrication machine, and the second conveyor passing the as-fabricated containers to an annealing lehr.

Containers in the conveyed train are received successively from the first conveyor, acted upon successively by the article handler, and passed successively to the second conveyor successively where they are distributed away, for example to an annealing lehr.

The invention in particular advantageously comprises a handling apparatus, and a tracking and control system for use with a handling apparatus, for handling containers, such as recently formed glass or glass-like material containers.

Accordingly, in a particularly preferred embodiment of the invention, the transportation apparatus comprises an apparatus for transferring fabricated containers, such as fabricated glass containers and for example bottles or the like, from a fabrication machine to an annealing lehr, with the primary conveyor comprising a machine conveyor to take finished containers successively away from the vicinity of a fabrication machine, and the secondary conveyor comprising a transfer conveyor at an angle thereto to take transferred containers successively to the vicinity of a lehr.

In a more complete embodiment, the apparatus of the invention further includes such a fabrication machine provided in the vicinity of a receiving portion of the first conveyor located distally of the article handler, and further comprises a lehr provided in the vicinity of an unloading portion of the second conveyor distally of the article handler, and a stacking apparatus to remove containers from the unloading portion and stack them on the lehr as they arrive successively at the unloading portion.

The invention will now be described by way of example only with reference to Figures 1 to 2 of the accompanying drawings wherein:
Figure 1 is a general schematic of the relationship between a stacker, a lehr and a feedback sensor in an embodiment of an apparatus and system in accordance with the invention;
Figure 2 is a general schematic of the relationship between a first and a second conveyor operating in accordance with the principles of the invention.

An example of the invention is discussed finding application in a handling apparatus for recently formed glass containers, for transferring fabricated glass containers and for example bottles or the like from a fabrication machine to an annealing lehr. A typical known arrangement has a primary machine conveyor to take finished glass containers successively away from the vicinity of a fabrication machine, and a secondary transfer or lehr conveyor at an angle thereto to take transferred glass containers to the lehr.

Such handling apparatus and annealing systems are general well known in the art, and are accordingly presented generally and schematically only in the figures. The skilled person would readily apply the principles of the invention to suitable fabrication equipment, lehr stackers and lehr ovens from those generally known in the art. The invention lies in the provision of a feedback system to control the handling of containers as they are passed to the lehr conveyor indirect reactive response in real time to a measured speed of the lehr conveyor.

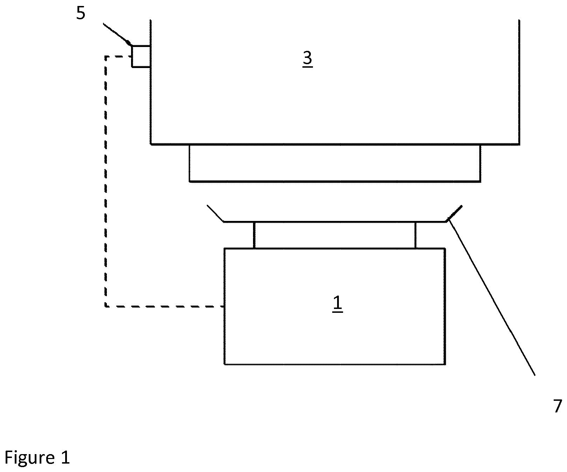

The arrangement by means of which this is primarily achieved in the embodiment is shown by the general schematic of figure 1. In figure 1 a stacker apparatus 1 including an object handler arm 7 is disposed to push as-fabricated containers into an annealing lehr oven 3. Such a combination of apparatus will be generally familiar in the art. In particular, various arrangements of stackers and lehr ovens will be well known.

The invention is distinctly characterised in the provision of a sensor 5 associated with the lehr oven 3 and in particular suitably positioned to determine a conveying velocity of a lehr conveyor associated with the lehr oven, and provided with a feedback communication (the broken line) to a suitable control system within the stacker 1 which is configured to control the object handler 7 in such manner as to ensure that containers are delivered onto a lehr conveyor belt for conveyance to and through the lehr oven at a push speed which is closely matched to the conveying speed of the lehr conveyor belt.

This is intended to minimise the stresses experienced by the recently fabricated glass containers as they are transferred to the lehr prior to annealing, and whilst therefore still in a relatively structurally delicate condition.

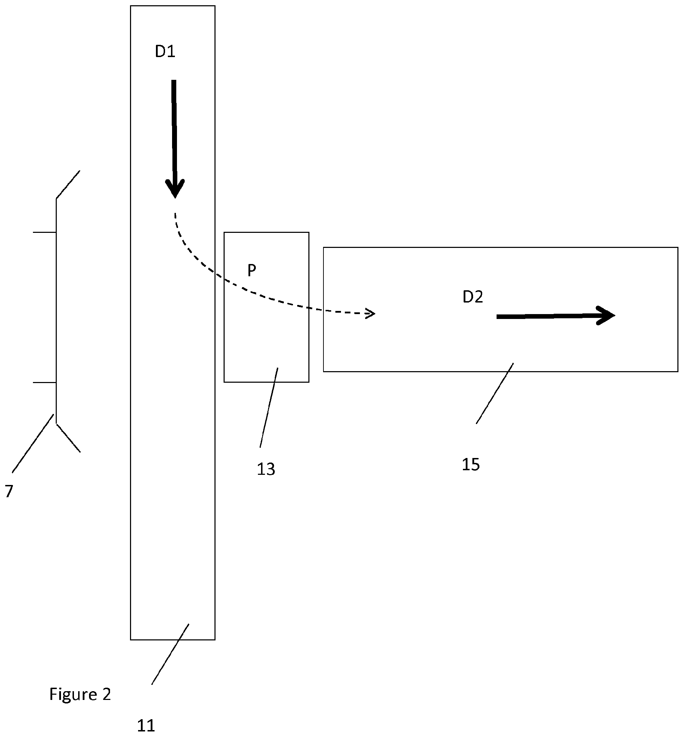

The action of the transfer operation is shown, again schematically, in figure 2.

Fabricated containers are conveyed from a bottle fabrication machine (not shown in figure 2 but of any suitable standard configuration for example) via a main conveyor belt 11 in a direction D1 in familiar manner. The main conveyor belt 11 is for example a suitable endless belt conveyor system such as is familiar in the art.

A second, cross or lehr conveyor belt 15 is provided with a second conveyance direction D2, in the embodiment at right angles to D1, and serves to convey the as-fabricated containers onto an annealing lehr (again, not shown but of any suitable standard configuration for example). The lehr conveyor belt 15 is for example a suitable endless belt conveyor system such as is familiar in the art.

An object handler such as the object handler 7 illustrated in figure 1 is disposed to push as-fabricated containers off the main conveyor belt 11 and via a dead plate 13 presenting a stationary sliding surface onto the lehr conveyor belt 15 via the profiled continuously curved path P.

This general arrangement will be familiar from typical prior art conveyor and lehr stacker systems.

As noted previously, the invention is distinctly characterised by the provision of a sensor 5 and a feedback control system whereby the object handler 7 delivers as-fabricated containers onto the lehr conveyor belt 15 at a speed which is closely matched in real time to the conveying speed of the lehr conveyor belt 15, using a feedback in real time of the measured lehr conveyor speed as a control parameter for control of and varation of the speed at which the object handler 7 pushes as-fabricated containers onto the lehr conveyor belt 15.

An example mode of operation is described. In this example mode of operation, the object handler 7 is adapted to push as-fabricated containers off the main conveyor belt 11 and onto the dead plate at a first push velocity which is relatively high, and to push the as-fabricated containers from the dead plate 13 onto the lehr conveyor belt 15 at a second push velocity which is relatively lower, and more closely matched to the speed of the lehr conveyor belt.

Such an arrangement meets in admirable manner the potentially conflicting requirements to move the as-fabricated containers off the main conveyor belt 11 as quickly as possible, but at the same time to avoid excessive stresses as the transferred containers are picked up by the lehr conveyor belt 15, and accordingly to avoid excessive mismatch between the final transfer or final push speed and that of the lehr conveyor belt. Careful choice of the profile P of the continuously curved path followed by the as-fabricated containers as they are pushed under the action of the object handler 7 also contributes to minimising transfer stresses.

This dynamic and reactive control of the final transfer or final push speed is made possible by the provision of the feedback control enabled by the sensor 5 which senses, and feeds back in real time, a current operational speed of the lehr conveyor belt 15, and provides a means of controlling the speed of the second push so that it is maintained in close correspondence with the measured speed of the lehr conveyor belt 15. In accordance with this principle, the speed of the second push is controlled and varied as necessary dynamically in real time based on a direct feedback from the dynamic real time speed of the lehr conveyor belt, and a close match of the two speeds is achievable.

The speed of the first push is typically significantly higher, and typically not subject to real time variation or feedback control.

The provision of a dynamic feedback from measured lehr conveyor belt speed as a control parameter for the push speed of the final push of the object handler is a key characterising feature of the invention, and a key feature by means of which the technical advantages discussed above are able to accrue.

It can be appreciated that such a feedback control system is generally applicable across a range of designs of apparatus, including known designs of container fabrication machines, stackers and lehr ovens, whether as a simple modification of new build equipment or as an after market modification of existing machines and equipment, which is readily adaptable to the full range of established design principles for such machines and equipment.

## Claims

1. A tracking and control system for use with an article handling apparatus of the type comprising a first conveyor for the passage of articles in a first direction at a first conveyance velocity a second conveyor for the passage of articles in a second direction at an angle to the first direction at a second conveyance velocity, and a distributor for the routeing of articles from the first conveyor to the second conveyor, including an article handler disposed to push the articles from the first conveyor onto the second conveyor:
the tracking and control system comprising:
an actuator operable upon the article handler to cause the same to push articles at a variable push velocity off the first conveyor and onto the second conveyor;
a monitor to monitor a conveyance velocity of the second conveyor;
a feedback controller to control the actuator such that a final push velocity as the article is pushed onto the second conveyor is more closely matched to the second conveyance velocity.

2. A tracking and control system according to claim 1 wherein the actuator is operable upon the article handler to cause the article handler to push articles at least at a first push velocity off the first conveyor and at a second push velocity onto the second conveyor; and the feedback controller is adapted to control the actuator such that the second push velocity is more closely matched to the second conveyance velocity than is the first push velocity.

3. A tracking and control system or an article handling apparatus according to any one of the preceding claims wherein the second conveyance velocity is less than the first conveyance velocity.

4. A tracking and control system or an article handling apparatus according to any one of the preceding claims wherein the actuator is operable upon the article handler to cause the article handler to push articles at least at a first push velocity off the first conveyor and at a second push velocity onto the second conveyor and the first push velocity is higher than the second push velocity.

5. A tracking and control system or an article handling apparatus according to claim 7 wherein the actuator is adapted to transition from the first push velocity to the second push velocity in abrupt manner.

6. A tracking and control system or an article handling apparatus according to any one of the preceding claims wherein the final push velocity is substantially matched to the second conveyance velocity.

7. A tracking and control system or an article handling apparatus according to any one of the preceding claims wherein the monitor is adapted to monitor the second conveyance velocity continuously during operation, allowing for continuous variation as necessary of the final push velocity.

8. An article handling apparatus comprising:
a first conveyor for the passage of articles in a first direction at a first conveyance velocity;
a second conveyor for the passage of articles in a second direction at an angle to the first direction at a second conveyance velocity;
a distributor for the routeing of articles from the first conveyor to the second conveyor, including:
an article handler disposed to push the articles from the first conveyor onto the second conveyor;
a tracking and control system in accordance with any preceding claim comprising:
an actuator operable upon the article handler to cause the same to push articles at a variable push velocity off the first conveyor and onto the second conveyor;
a monitor to monitor a conveyance velocity of the second conveyor;
a feedback controller to control the actuator such that a final push velocity as the article is pushed onto the second conveyor is more closely matched to the second conveyance velocity.

9. An article handling apparatus according to claim 8 provided in conjunction with a containerware fabrication machine for forming an array of articles to pass through an annealing lehr, in that the first conveyor comprises a main conveyor disposed such that a row of such containers is conveyed away from the fabrication machine in a first direction, and the second conveyor comprises a lehr conveyor, disposed such that a row of containers is conveyed in a second direction at an angle thereto to an annealing lehr.

10. A tracking and control system or an article handling apparatus according to any one of the preceding claims wherein a stationary transition region is provided between the first and second moving conveyors.

11. A tracking and control system or an article handling apparatus according to claim 10 wherein the stationary transition region comprises a dead plate.

12. A tracking and control system or an article handling apparatus according to one of claims 10 or 11 wherein the actuator is adapted to transition from a first push velocity to a second push velocity in the transition region.

13. A tracking and control system or an article handling apparatus according to any one of the preceding claims wherein the article handler is adapted to push the containers from the first conveyor directed in a first direction to the second conveyor directed in a second direction at an angle to the first conveyor via a continuously curved path.

14. An article handling method comprising:
moving a succession of articles from a first conveyor for the passage of articles in a first direction at a first conveyance velocity to a second conveyor for the passage of articles in a second direction at an angle to the first direction at a second conveyance velocity by:
pushing each article from the first conveyor to the second conveyor at a variable push velocity;
monitoring the second conveyance velocity;
controlling the variable push velocity such that an article is pushed onto the second conveyer at a final push velocity that it is more closely matched to the second conveyance velocity.

15. An article handling method according to claim 14 comprising pushing each article from the first conveyor to the second conveyor at a first push velocity off the first conveyor and at a second push velocity onto the second conveyor; monitoring the second conveyance velocity;
controlling the second push velocity so that it is more closely matched to the second conveyance velocity than is the first push velocity.
